# EUROPEAN PATENT APPLICATION

(11) **EP 4 679 464 A1**
(43) Date of publication of application: **14.01.2026**
(21) Application number: 24766977.3
(22) Date of filing: 28.02.2024
(51) Int. Cl.: H01F 38/14, B60L 5/00, B60L 53/12, H01F 5/00, H02J 7/00, H02J 50/12

(54) **COIL UNIT**

(30) Priority: 08.03.2023 JP 2023035500; 22.01.2024 JP 2024007449
(71) Applicant: DENSO CORPORATION, Kariya-city, Aichi 448-8661 (JP)
(72) Inventor: SUZUKI, Hironari, Kariya-city, Aichi 448-8661 (JP); TAKITA, Shimpei, Kariya-city, Aichi 448-8661 (JP); TAKAHASHI, Eisuke, Kariya-city, Aichi 448-8661 (JP); KANESAKI, Masaki, Kariya-city, Aichi 448-8661 (JP); OTSUBO, Makoto, Kariya-city, Aichi 448-8661 (JP)
(74) Representative: TBK
(86) International application number: PCT/JP2024/007221
(87) International publication number: WO 2024/185606

(57) **Abstract**

A coil unit (10) includes a ferrite plate (13) and a coil board (14) to which a coil (112) for transmission or reception of AC power is mounted. The ferrite plate is mounted on the ferrite plate. The coil unit includes a housing that houses the ferrite plate and the coil board therein while being stacked in a predetermined stacking direction. The coil unit includes post structures (21, 22, 23, 24) for ensuring a space in the housing in the stacking direction. Each of the post structures includes at least one through hole (41, 42) formed through the ferrite and the coil board, and at least one support post (31, 32) received in the at least one through hole. Each of the post structures is arranged along a corresponding respective flow direction of magnetic flux to be induced by the coil at the transmission or reception of the AC power from the outer edge of the ferrite toward the central axis of the coil unit through the ferrite plate. The post structures are separated from one another around the central axis as viewed in the stacking direction.

## Description

### CROSS-REFERENCE TO RELATED APPLICATION

This present application is based on and claims the benefit of priority from each of Japanese Patent Application No. 2023-35500 filed on March 8, 2023 and Japanese Patent Application No. 2024-7449 filed on January 22, 2024, the disclosure of each of which is incorporated herein by reference.

### TECHNICAL FIELD

The present disclosure relates to coil units.

### BACKGROUND

Wireless power transfer systems, which have been developed recently, use the dynamic wireless power transfer (DWPT) technology to perform wireless power supply. Such a wireless power transfer system is configured such that at least one of power transmission coils embedded in the ground wirelessly transfers power to a power reception coil mounted under the floor of a vehicle. For example, Patent Literature 1 discloses a coil unit usable by such a wireless power transfer system.

The coil unit disclosed in Patent Literature 1 includes a housing case in which a coil, a ferrite plate, a board and other components are disposed. Electric devices including a capacitor are mounted on one major surface of the board. The board has a slit formed therein. Even if external impact on the housing case causes the housing case to be bent and deformed, the slit absorbs the impact to prevent damage such as cracks from occurring in the board itself.

### CITATION LIST

Patent Literature 1 Japanese Patent Application Publication No. 2018-26496

### SUMMARY

The coil unit disclosed in Patent Literature 1 is merely configured such that the slit absorbs impact applied on the board. This configuration therefore may have no contribution to improvement of the strength of the board itself.

Support posts may be arranged in the coil unit; the support posts serve as means for improving the strength of the board. Random arrangement of the support posts in the coil unit may impede the flow of magnetic flux generated from the ferrite plate, resulting in the power transfer performance of the coil unit decreasing.

The present disclosure, which has been created from the above viewpoint, seeks to provide coil units, each of which is capable of improving the strength of a housing while maintaining the power transfer performance.

The present disclosure can be achieved as an exemplary aspects described hereinafter.

A first aspect of the present disclosure provides a coil unit having a central axis and usable for a wireless power transfer system. The coil unit includes a magnetic-material plate having an outer edge, a coil board to which a coil for transmission or reception of AC power is mounted, and a housing that houses the magnetic-material plate and the coil board therein while being stacked in a predetermined direction that is defined as a stacking direction.

The coil unit includes a plurality of post structures for ensuring a space in the housing in the stacking direction. Each of the post structures includes at least one through hole formed through the magnetic-material plate and the coil board, and at least one support post received in the at least one through hole.

Each of the post structures is arranged along a corresponding respective flow direction of magnetic flux to be induced by the coil at the transmission or reception of the AC power from the outer edge of the magnetic-material plate toward the central axis through the magnetic-material plate. The post structures are separated from one another around the central axis as viewed in the stacking direction.

Specifically, the post structures of the first aspect are each arranged along the corresponding respective flow direction of magnetic flux to be induced by the coil at the transmission or reception of the AC power from the outer edge of the magnetic-material plate toward the central axis through the magnetic-material plate, and are separated from one another around the central axis as viewed in the stacking direction.

The flow of the magnetic flux from the outer edge of the magnetic-material plate toward the central axis may be impeded through the post structures.

However, the flow of the magnetic flux from the outer edge of the e magnetic-material plate toward the central axis is ensured through the regions of the magnetic-material plate located between the post structures that are separated from one another around the central axis. This therefore improves the strength of the housing while maintaining the power transfer performance of the coil unit of the first aspect.

A second aspect of the present disclosure provides a coil unit having a central axis and usable for a wireless power transfer system. The coil unit includes a magnetic-material plate having an outer edge, a coil for transmission or reception of AC power, and a housing that houses the magnetic-material plate and the coil therein while being stacked in a predetermined direction that is defined as a stacking direction, the housing comprising a first casing and a second casing separatable in the stacking direction.

The coil unit includes a plurality of post structures. Each of the post structures includes at least one support post arranged to extend from the first casing to the second casing while penetrating through the magnetic-material plate and the coil to combine the first casing and the second casing with one another. Each of the post structures is arranged along a corresponding respective flow direction of magnetic flux to be induced by the coil at the transmission or reception of the AC power from one of the outer edge of the magnetic-material plate and the central axis toward the other thereof through the magnetic-material plate. The post structures are separated from one another around the central axis as viewed in the stacking direction.

The post structures of the second aspect are each arranged along the corresponding respective flow direction of magnetic flux to be induced by the coil at the transmission or reception of the AC power from one of the outer edge of the magnetic-material plate and the central axis toward the other thereof through the magnetic-material plate, and are separated from one another around the central axis as viewed in the stacking direction.

Specifically, the flow of the magnetic flux from the outer edge of the magnetic-material plate toward the central axis may be impeded through the post structures.

However, the flow of the magnetic flux from either one of the outer edge of the magnetic-material plate and the central axis toward the other thereof is ensured through the regions of the magnetic-material plate located between the post structures that are separated from one another around the central axis. This therefore improves the strength of the housing while maintaining the power transfer performance of the coil unit of the second aspect.

### BRIEF DESCRIPTION OF THE DRAWINGS

Other aspects of the present disclosure will become apparent from the following description of embodiments with reference to the accompanying drawings in which:
Fig. 1 is a diagram illustrating a schematic configuration of a wireless power transfer system according to the first embodiment of the present disclosure;
Fig. 2 is a circuit diagram illustrating a schematic circuit configuration of the wireless power transfer system according to the first embodiment of the present disclosure;
Fig. 3 is an exploded perspective view illustrating an internal configuration of a coil unit according to the first embodiment of the present disclosure;
Fig. 4 is a plan view schematically illustrating the coil unit;
Fig. 5 is a cross-sectional view taken along line V-V of Fig. 4, which schematically illustrates the coil unit;
Fig. 6 is a plan view illustrating a ferrite plate;
Fig. 7 is a plan view illustrating a coil board;
Fig. 8 is a plan view illustrating a ferrite plate according to the second embodiment of the present disclosure;
Fig. 9 is a plan view illustrating a ferrite plate according to the third embodiment of the present disclosure;
Fig. 10 is a plan view illustrating a ferrite plate according to the fourth embodiment of the present disclosure;
Fig. 11 is an exploded perspective view illustrating an internal configuration of a coil unit according to the fifth embodiment of the present disclosure;
Fig. 12 is a cross-sectional view taken along line XII-XII of Fig. 11, which schematically illustrates the coil unit of the fifth embodiment;
Fig. 13 is a cross-sectional view schematically illustrating a coil unit according to the sixth embodiment;
Fig. 14 is a partially cross-sectional view schematically illustrating a coil unit according to the seventh embodiment;
Fig. 15 is a cross-sectional view schematically illustrating a coil unit according to the eighth embodiment; and
Fig. 16 is a plan view schematically illustrating a coil according to the ninth embodiment.

### DETAILED DESCRIPTION OF EMBODIMENTS

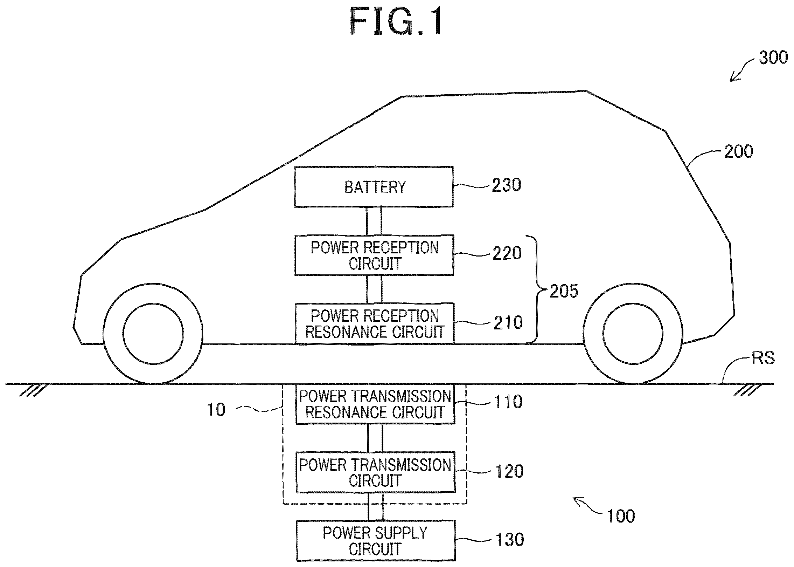

The following describes plural embodiments with reference to Figs. 1 to 10.

### First embodiment

### Configuration of wireless power transfer system 300

The following describes a coil unit 10 according to the first embodiment with reference to Figs. 1 to 7.

The coil unit 10 according to the first embodiment is included in a wireless power transfer system 300.

Referring to Fig. 1, the wireless power transfer system 300 includes a power transmission device 100 mounted to a road RS, and a power reception device 205 mounted to a vehicle 200. The wireless power transfer system 300 is configured such that the power transmission device 110 is capable of wirelessly supplying power to the power reception device 205 of the vehicle 200. The coil unit 10 according to the first embodiment is included in the power transmission device 100.

The power transmission device 100 includes a power transmission resonator 110, a power transmission circuit 120, and a power supply circuit 120. The power transmission resonance circuit 110, power transmission circuit 120, and power supply circuit 130 according to the first embodiment are embedded in a road RS. The power transmission device 100 may include a plurality of power transmission resonators 110 and a plurality of power transmission circuits 120. For example, the power transmission resonators 110 may be arranged sequentially in the longitudinal direction of the road RS, which corresponds to the traveling direction of the vehicle 200. Similarly, the power transmission circuits 120 may be arranged sequentially in the longitudinal direction of the road RS.

The power transmission resonance circuit 110, power transmission circuit 120, and power supply circuit 130 may be not necessarily embedded in the road RS. For example, the power transmission resonance circuit 110, power transmission circuit 120, and power supply circuit 130 may be mounted at predetermined positions on the road RS at which these circuits 110, 120, and 130 located at the respective predetermined positions do not interfere with the traveling of the vehicle 200. The power transmission circuit 120 and power supply circuit 130 are preferably located close to the power transmission resonance circuit 110.

The power supply circuit 130 is configured to supply alternating-current (AC) power based on an AC power supply, such as a grid power, to the power transmission circuit 120 through power-supply cables. The power transmission circuit 120, which serves as an AC converter, includes a rectifier, an inverter, and a filter. Specifically, the power transmission circuit 120 is configured to convert the AC power supplied from the power supply circuit 130 into direct-current (DC) power, and convert the DC power into high-frequency AC power that can be transferred to the power reception device 205 of the vehicle 200. Then, the power transmission circuit 120 is configured to supply the high-frequency AC power to the power transmission resonance circuit 110.

The power transmission resonance circuit 110 includes a power transmission coil 112, and is configured to transmit, to a power reception resonance circuit 210 of the power receiving device 200, AC power that is induced in the power transmission coil 112 based on electromagnetic induction.

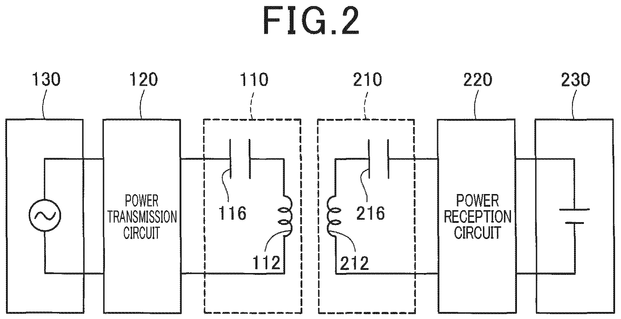

As illustrated in Fig. 2, the power transmission resonance circuit 110 includes the power transmission coil 112 and a first capacitor 116 connected in series to one another. The first capacitor 116 serves as a resonant capacitor. That is, the power transmission resonance circuit 110 serves as an LC circuit. The power transmission coil 112 and the first capacitor 116 may be connected in parallel to each other. The power transmission coil 112 constitutes the coil unit 10 of the first embodiment.

The vehicle 200 is configured as a motor vehicle, such as an electric vehicle or a hybrid vehicle, equipped with a drive motor. Specifically, the vehicle 200 includes, as illustrated in Fig. 1, the power reception device 205 and a battery 230. The power reception device 205 includes the power reception resonance circuit 210 and a power reception circuit 220.

The power reception resonance circuit 210 includes, as illustrated in Fig. 2, a power reception coil 212 and a second capacitor 216 serving as a resonant capacitor. The power reception resonance circuit 210 is mounted to, for example, the bottom 290 of the vehicle 200. The power reception resonance circuit 210 is configured to receive, through the power reception coil 212, the AC power that is induced in the power transmission circuit 110 of the power transmission device 100.

The power reception circuit 220 is configured to convert the AC power output from the power reception resonance circuit 210 into DC power. Specifically, the power reception circuit 220 may include, for example, a filter, a rectifier, and a power converter. The rectifier is configured to convert the AC power output from the power reception resonance circuit 210 into first DC power, and the power converter is configured to convert the first DC power into second DC power whose level is suitable to charge the battery 230.

The battery 230 is a secondary battery for outputting DC power for driving the drive motor that serves as a driving source for the vehicle 200. The DC power output from the power reception circuit 220 can be used to charge the battery 230. The DC power output from the power reception circuit 220 can be used to charge an unillustrated auxiliary battery and/or drive auxiliary devices installed in the vehicle 200.

### Configuration of coil unit 10

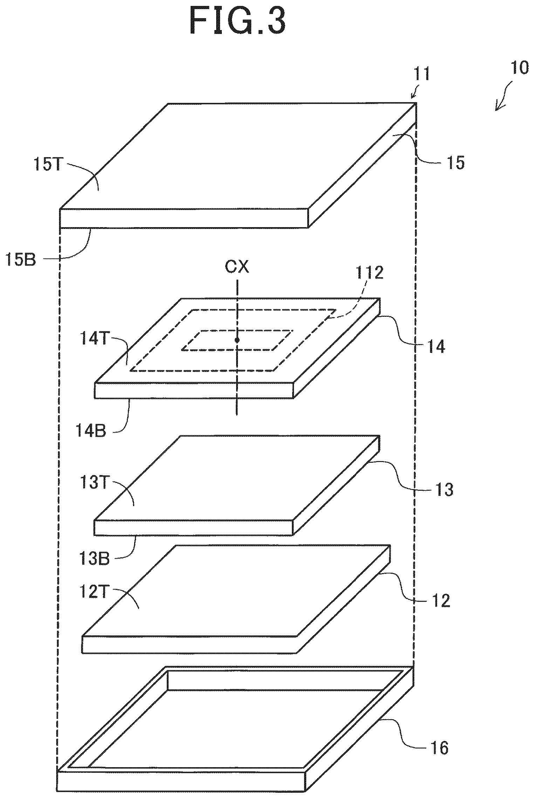

The following describes the configuration of the coil unit 10 with reference to Fig. 3.

As illustrated in Fig. 3, the coil unit 10 includes a housing 11, an aluminum plate 12 having an upper surface 12T, a ferrite plate 13, and a coil board 14. To facilitate understanding of the technology, Fig. 1 illustrates the coil unit 10 as including the power transmission resonance circuit 110 and power transmission circuit 120, although the coil unit 10 may not necessarily include the power transmission resonance circuit 110 and power transmission circuit 120. The coil unit 10 may include, for example, one or more components included in the power supply circuit 130 in addition to the power transmission resonance circuit 110 and power transmission circuit 120.

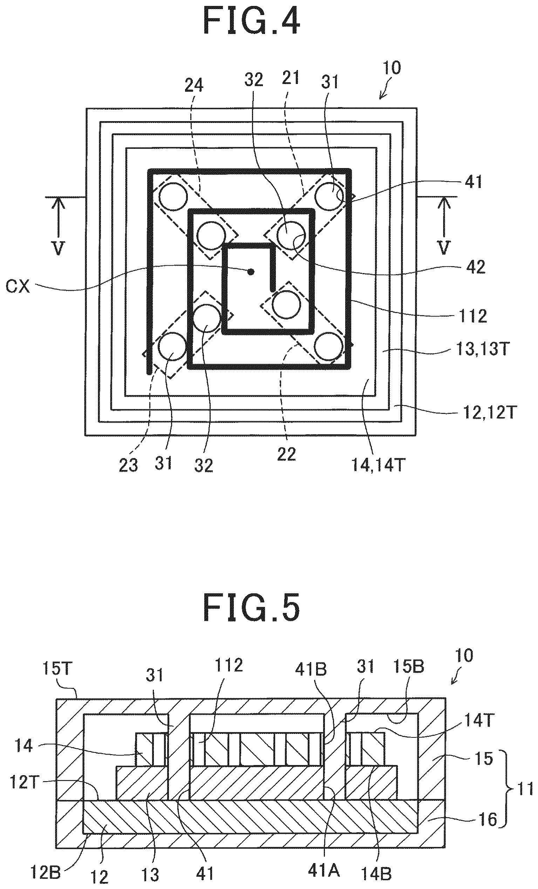

The coil unit 10 additionally includes a plurality of post structures 21, 22, 23, and 24 (see Fig. 4) for ensuring a space in the housing 11 in the vertical direction. In Fig. 3, illustration of the detailed structure of each post structure 21 to 24 is omitted. The detailed structure of each post structure 21 to 24 will be illustrated in Figs. 4 to 7 and therefore the detailed structure of each post structure 21 to 24 will be described with reference to Figs. 4 to 7.

The housing 11 includes an upper casing 15 and a lower casing 16. Each of the upper and lower casings 15 and 16 has non conductivity, and is formed of a non-magnetic material, such as resin. The joint boundary between the upper and lower casings 15 and 16 in the vertical direction is arranged to be flush with the upper surface 12T of the aluminum plate 12 (see Fig. 5). In other words, the lower casing 16 is arranged below the upper surface 12T of the aluminum plate 12. In this arrangement, the lower casing 16 may not be formed of a non-magnetic and non-conductive material, and may be formed of a material having shielding properties similar to the aluminum plate 12 (to be described later). By forming the housing 11 from a resin material, leakage of magnetic flux created from the power transmission coil 112 through the sidewalls of the housing 11 can be reduced or prevented.

Each of the upper and lower casings 15 and 16 has a substantially flat plate-like shape with raised side walls as illustrated in Fig. 3. The upper casing 15 has opposing upper and lower surfaces 15T and 15B. The coil board 14 has opposing upper and lower surfaces 14T and 14B. The ferrite plate 13 has opposing upper and lower surfaces 13T and 13B. The upper casing 15 has opposing upper and lower surfaces 15T and 15B. The upper casing 15 is arranged such that the upper surface 15T serves as one of all the sides that the coil unit 10, which can face the power reception coil 212 of the vehicle 200. The upper surface 15T of the upper casing 15 will be referred to as a coil facing surface. The lower surface 15B of the upper casing 15 covers the upper surface 14T of the coil board 14 to protect the coil board 14 and the power transmission coil 112 from outside air. The upper casing 15 of the coil unit 10 embedded in the road RS according to the first embodiment may be exposed from the road RS.

The raised side walls of the upper casing 15 are attached to the corresponding raised side walls of the lower casing 16 by one or more unillustrated securing members to constitute the housing 11 in which the coil board 14, the ferrite plate 13, and the aluminum plate 12 are housed. In particular, the aluminum plate 12, the ferrite plate 13, and the coil board 14 are stacked from the lower casing 16 to the upper casing 15 in this order.

The aluminum plate 12 has a substantially rectangular appearance in plan view. The aluminum plate 12 is arranged such that the upper surface 12T abuts onto the lower surface 13B of the ferrite plate 13. The aluminum plate 12 is formed of aluminum or aluminum alloy. The aluminum plate 12 provides heat dissipation to dissipate heat generated in the power transmission coil 12. Additionally, the aluminum plate 12 provides magnetic shielding to prevent magnetic flux generated by the coil board 14 from leaking outward. In place of the aluminum plate 12, a plate formed of another metal, such as copper, may be used to constitute a plate member for providing magnetic shielding.

The ferrite plate 13 has a substantially rectangular appearance in plan view. On the upper surface 13T of the ferrite plate 13, the coil board 14 is mounted. The lower surface 13B of the ferrite plate 13. The upper surface 13T of the ferrite plate 13 is disposed to be closer to the coil facing surface 15T than the lower surface 13B is. The ferrite plate 13 is arranged such that the upper surface 13T faces the lower surface 14B of the coil board 14. The ferrite plate 13, which is located to abut onto the lower surface 14B of the coil board 14 according to the first embodiment, may be located to be separated from the lower surface 14B of the coil board 14.

The coil board 14 is a rigid-type printed wiring board. The coil board 14 has a substantially rectangular appearance in plan view. The power transmission coil 112 is mounted to the coil board 14. The power transmission coil 112 according to the first embodiment is a coil comprised of a plurality of circumferential turns formed by winding an annular conductor around a central axis CX of the coil unit 10. The power transmission coil 112 has a hollow region including the central axis CX, in which no conductor is provided. The central axis CX extends in the vertical direction while passing through the center of each of the aluminum plate 12, the ferrite plate 13, and the coil board 14. The direction in which the central axis CX extends is in alignment with the stacking direction in which the ferrite plate 13 and the coil board 14 are stacked.

The power transmission coil 112 may be formed of, for example, a conductive wire, such as a magnet wire. In this modification, the power transmission coil 112 may be comprised of a coiled, resin-molded magnet wire. The power transmission coil 112 may be formed of one of various coils, including a spiral coil comprised of a spirally formed conductor and a helical coil comprised of a helically-wound conductive wire that has a circular or a rectangular lateral cross section.. The power transmission coil 112 may be formed of a twisted conductive wire.

An AC current flowing through the power transmission coil 112 forms magnetic flux around the power transmission coil 112. The magnetic flux formed around the power transmission coil 112 passes through the hollow region of the power transmission coil 112, the ferrite plate 13, and a peripheral region of the power transmission coil 112. The linkage of at least a part of the magnetic flux formed around the power transmission coil 112 with the power reception coil 212 induces an AC current in the power reception coil 212. The AC current induced in the power reception coil 212 induces magnetic flux around the power reception coil 212. The magnetic flux created around the power transmission coil 112 links with the power reception coil 212, resulting in the power reception coil 212 wirelessly receiving power from the power transmission coil 112.

### Configuration of post structures 21, 22, 23, and 24

As illustrated in Fig. 4, the four post structures 21, 22, 23, and 24, which is an example of multiple post structures, are provided in the housing 11. To facilitate understanding of arrangement of the post structures 21, 22, 23, and 24, illustration of the upper casing 15 is omitted in Fig. 4, so that each feature in the housing 11 as viewed from the upper-casing side is illustrated in Fig. 4.

The four post structures 21, 22, 23, and 24 are, as illustrated in Fig. 4, a first post structure 21, a second post structure 22, a third post structure 23, and a fourth post structure 24. The first post structure 21, second post structure 22, third post structure 23, and fourth post structure 24 are radially arranged around the central axis CX at equal intervals of 90 degrees. That is, the first to fourth post structures 21 to 24 are separated from one another at equal intervals of 90 degrees. The first to fourth post structures 21 to 24 are arranged point-symmetrically with respect to the central axis CX as viewed in the stacking direction.

Although the first to fourth post structures 21 to 24 have different arrangement positions in the coil unit 10, because their configurations are identical to one another, the following describes the configuration of the first post structure 21 as a typical example of the first to fourth post structures 21 to 24.

The first post structure assembly 21 includes a first support post 31 and a second support post 32. The second support post 32 is disposed to be closer to the central axis CX than the first support post 32 is. The first and second support posts 31 and 32 are arranged along a corresponding respective flow direction in which a portion of the magnetic flux radially flows from the outer edge of the ferrite plate 13 toward the central axis CX through the ferrite plate 13.

The alignment of the first and second support posts 31 and 32 in the magnetic-flux flowing direction enables the first post structure 21 to be as a whole along the magnetic-flux direction. The coil unit 10 has first and second through holes 41 and 42 formed through the ferrite plate 13 and the coil board 14 in the stacking direction. The first support post 31 is received in the first through hole 41 to extend through the first through hole 41. Similarly, the second support post 32 is received in the second through hole 42 to extend through the second through hole 42.

The first and second support posts 31 and 32 have, as illustrated in Fig. 4, the same cylindrical shape and size. Each of the first and second support posts 31 and 32 has a cross section orthogonal to the central axis CX, and the area of the cross section of each of the first and second support posts 31 and 32 is sufficiently smaller than the area of the upper surface 13T of the ferrite plate 13. The first and second support posts 31 and 32, which constitute the first post structure 21, and the first and second support posts 31 and 32, which constitute the third post structure 23, are aligned on one diagonal line of the ferrite plate 13 passing through the central axis CX. Similarly, the first and second support posts 31 and 32, which constitute the second post structure 22, and the first and second support posts 31 and 32, which constitute the fourth post structure 24, are aligned on the other diagonal line of the ferrite plate 13 passing through the central axis CX.

The first and second support posts 31 and 32 of each post structure 21, 22, 23, 24 are radially disposed to be spaced apart from the outer edge of the ferrite plate 13 toward the central axis CX as viewed in the stacking direction.

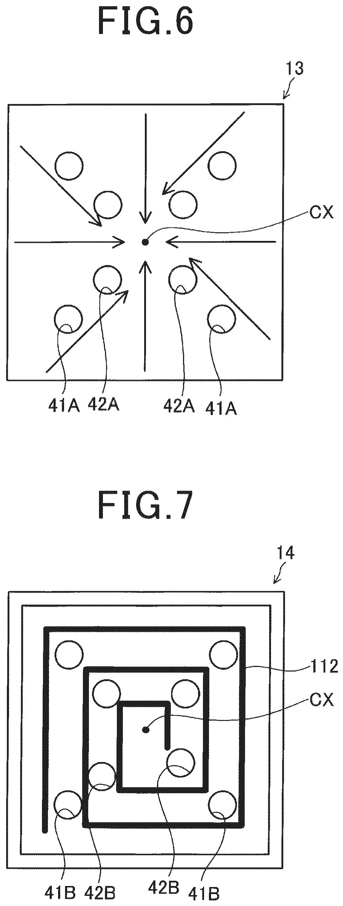

The first and second through holes 41 and 42 and the first and second support posts 31 and 32 are not provided on and near the central axis CX. Each of the first and second support posts 31 and 32 is arranged between a corresponding adjacent pair of the circumferential turns of the power transmission coil 112. This arrangement avoids impediment of the current flow through the power transmission coil 112. For example, the first support posts 31 are arranged between the innermost turn and the second turn located radially outward from the center. Each of Figs. 4 and 7 illustrates an example where (i) the power transmission coil 112 is spirally wound and (ii) each of the first and second support posts 31 and 32 is arranged between a corresponding adjacent pair of the circumferential turns of the power transmission coil 112. Each of the first and second support posts 31 and 32 may be located at any position as long as the corresponding one of the first and second support posts 31 and 32 avoids impediment of the current flow through the power transmission coil 112.

As illustrated in Fig. 5, each of the first and second support posts 31 and 32 is configured to extend from the lower surface 15B of the upper casing 15 to the upper surface 12T of the aluminum plate 12 in the stacking direction so as to be integrated with the upper casing 15. That is, each of the first and second support posts 31 and 32 is arranged to continuously extend from the aluminum plate 12 to the upper casing 15 to ensure the space in the housing 11 in the vertical direction. Each of the first and second support posts 31 and 32 has non conductivity, and is formed of a non-magnetic material, such as resin. The upper casing 15 and the first and second support posts 31 and 32, each of which is formed of resin, are manufactured as a one-piece member by, for example, integral molding.

As illustrated in Figs. 5 to 7, the first and second through holes 41 and 42 are each formed through the ferrite plate 13 and the coil board 14. The first and second support posts 31 and 32 are received in the respective first and second through holes 41 and 42. Each of the first and second through holes 41 and 42 formed through the ferrite plate 13 and the coil board 14 is positioned to be in alignment with the position of the corresponding one of the first and second support portions 31 and 32 in the stacking direction.

More specifically, each first through hole 41 is comprised of a first through-hole portion 41A formed through the ferrite plate 13 through which the corresponding first support post 31 extends (see Fig. 6), and a first through-hole portion 41B formed through the coil board 14 through which the corresponding first support post 31 extends (see Fig. 7). Similarly, each second through hole 42 is comprised of a second through-hole portion 42A formed through the ferrite plate 13 through which the corresponding second support post 32 extends (see Fig. 6), and a second through-hole portion 42B formed through the coil board 14 through which the corresponding second support post 32 extends (see Fig. 7). That is, there are four sets of the first and second through-hole portions 41A and 42A, and there are four sets of the first and second through-hole portions 41B and 42B.

The four first through-hole portions 41A formed through the ferrite plate 13 are radially arranged around the central axis CX to be spaced apart, and the four second through-hole portions 42A formed through the ferrite plate 13 are radially arranged around the central axis CX to be spaced apart. The four first through-hole portions 41B formed through the coil board 14 are radially arranged around the central axis CX to be spaced apart, and the four second through-hole portions 42B formed through the coil board 14 are radially arranged around the central axis CX to be spaced apart. The first and second through-hole portions 41A and 42A formed through the ferrite plate 13 and the first and second through holes 41B and 42B formed through the coil board 14 will also be simply referred to as the first and second through holes 41 and 42 if there is no need of distinguishing the first and second through-hole portions 41A and 42A from the first and second through holes 41B and 42B.

Each of the first and second through holes 41 and 42 is formed as a through hole having a circular cross section with a predetermined size that enables the corresponding one of the first and second support posts 31 and 32 to be inserted thereinto. The size of each of the first and second through-hole portions 41A and 42A formed through the ferrite plate 13 is the same as that of the corresponding one of the first and second through-hole portions 41B and 42B formed through the coil board 14.

In other words, the shape of the cross section of each of the first and second support posts 31 and 32 in the direction orthogonal to the stacking direction is the same as that of the cross section of the corresponding one of the first and second through holes 41 and 42 in the direction orthogonal to the stacking direction. Strictly speaking, because each of the first and second support posts 31 and 32 is insertable in the corresponding one of the first and second through holes 41 and 42, the size of the cross section of each of the first and second support posts 31 and 32 is slightly smaller than that of the corresponding one of the first and second through holes 41 and 42. However, the word "same" is not limited to the word "same" in the strict sense, but is interpreted as being the "same" if, in light of common technical knowledge in the relevant technical field, each of the first and second support posts 31 and 32 has an identity within the range that is normally considered to be the "same," to the extent that each of the first and second support posts 31 and 32 can be inserted into the corresponding one of the first and second through holes 41 and 42.

Fig. 6 schematically illustrates how the magnetic flux flows through the ferrite plate 13 using arrows. The magnetic flux transferred from the power transmission coil 112 to the power reception coil 212 arranged to face the power transmission coil 112 flows, as illustrated in Fig. 6, from the outer edge of the ferrite plate 13 toward the central axis CX through the ferrite plate 13. Because the first through-hole portions 41A are radially disposed around the central axis CX to be spaced apart and the second through-hole portions 41A and 42A are radially disposed around the central axis CX to be spaced apart, the magnetic flux flows toward the central axis CX in most of the areas of the ferrite plate 13 where the first and second through-hole portions 41A and 42A are not provided.

The coil unit 10 of the first embodiment is configured such that the first to fourth post structures 21 to 24 are each arranged along a corresponding respective flow direction in which a portion of the magnetic flux radially flows from the outer edge of the ferrite plate 13 toward the central axis CX through the ferrite plate 13 and are separated from one another around the central axis CX as viewed in the stacking direction. The flow of the magnetic flux from the outer edge of the ferrite plate 13 toward the central axis CX may be impeded through the first to fourth post structures 21 to 24.

However, the flow of the magnetic flux from the outer edge of the ferrite plate 13 toward the central axis CX is ensured through the regions of the ferrite plate 13 located between the first to fourth post structures 21 to 24 that are separated from one another around the central axis CX. Additionally, the first through holes 41 are radially disposed around the central axis CX to be spaced apart, the corresponding first support posts 31 are radially disposed around the central axis CX to be spaced apart, the second through holes 42 are radially disposed around the central axis CX to be spaced apart, and the corresponding second support posts 32 are radially disposed around the central axis CX to be spaced apart. The above arrangement of the first through holes 41, the first support posts 31, the second through holes 42, and the second support posts 32 enables the magnetic flux to flow through the ferrite plate 13.

For example, if an annular post and a corresponding annular through hole were continuously provided around the central axis CX as viewed in the stacking direction, most of the magnetic-flux flow from the outer edge of the ferrite plate 13 to the central axis CX would be impeded by the annular post.

In contrast, the first to fourth post structures 21 to 24 according to the first embodiment are each arranged along the magnetic-flux flowing direction from the outer edge of the ferrite plate 13 toward the central axis CX through the ferrite plate 13 and are separated from one another around the central axis CX. This arrangement enables the magnetic flux to flow through the regions of the ferrite plate 13 where no support posts 31 and 32 and no through holes 41 and 42 are provided, thus preventing impediment of the magnetic-flux flow.

Additionally, the first support posts 31 and the second support posts 32 improve the strength of the housing 11.

Accordingly, the coil unit 10 according to the first embodiment makes it possible to improve the strength of the housing 11 while maintaining the magnetic-flux flow smoothly to thereby maintain the power transfer performance thereof.

The coil unit 10 of the first embodiment is configured such that the first to fourth post structures 21 to 24 are arranged point-symmetrically with respect to the central axis CX as viewed in the stacking direction. This configuration therefore enables the magnetic-flux density to be evenly distributed on and in the ferrite plate 13, making it possible to transfer, in balance, power from the power transmission coil 112.

The coil unit 10 of the first embodiment is configured such that the shape and size of the cross section of each of the first and second support posts 31 and 32 in the direction orthogonal to the stacking direction is substantially the same as those of the cross section of the corresponding one of the first and second through holes 41 and 42 in the direction orthogonal to the stacking direction. This configuration therefore makes it easier to ensure regions of the ferrite plate 13 through which the magnetic flux flows as compared with the configuration where the size of the cross section of each of the first and second support posts 31 and 32 in the direction orthogonal to the stacking direction is larger than that of the cross section of the corresponding one of the first and second through holes 41 and 42 in the direction orthogonal to the stacking direction.

The coil unit 10 of the first embodiment is configured such that the first and second support posts 31 and 32 are integrally formed with the upper casing 15. This configuration therefore facilitates the manufacturing of the first and second support posts 31 and 32, and increases the strength of the coil unit 10 more strongly as compared with the configuration that the first and second support posts 31 and 32 and the housing 11 are manufactured individually and thereafter the first and second support posts 31 and 32 are adhered to the housing 11.

The coil unit 10 of the first embodiment is configured such that the first and second through holes 41 and 42 and the first and second support posts 31 and 32 are provided while bypassing the central axis CX and the vicinity of the central axis CX. Because the magnetic flux flowing from the outer edge of the ferrite plate 13 to the central axis CX is concentrated so that the magnetic-flux density in the vicinity of the central axis CX is likely to be high, this configuration of the coil unit 10 suppresses magnetic saturation in the vicinity of the central axis CX.

### Second embodiment

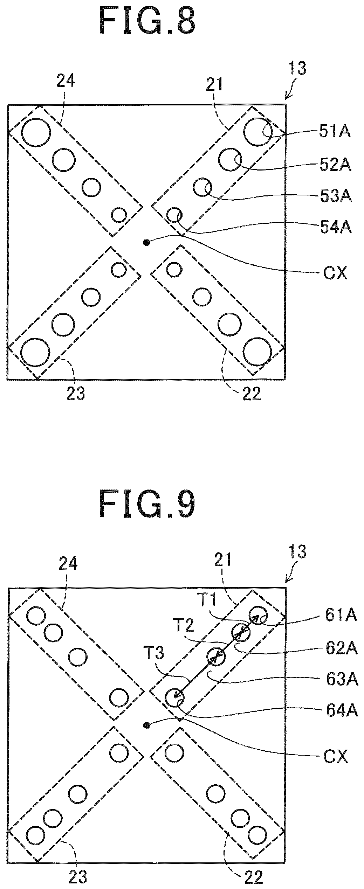

The following describes a coil unit 10 according to the second embodiment with reference to Fig. 8. In each of the second and subsequent embodiments, the overall configuration of each of (i) the wireless power transfer system 300 (see Fig. 19, (ii) the circuit configuration of the wireless power transfer system 300 (see Fig. 2), and (iii) the overall configuration of the coil unit 10 except the first to fourth post structures 21 to 24 (see Fig. 3) is substantially identical to that of the first embodiment. For this reason, reference characters used for the features of the wireless power transfer system 300 of the first embodiment are assigned to the substantially same features of the wireless power transfer system 300 of each of the second and subsequent embodiments, and therefore the detailed descriptions for the same features of the wireless power transfer system 300 of each of the second and subsequent embodiments are omitted.

Like the first embodiment, the first to fourth post structures 21 to 24 are arranged point-symmetrically with respect to the central axis CX as viewed in the stacking direction. As compared with the first embodiment, the detailed configuration of each of the first to fourth post structures 21 to 24 according to the second embodiment is different from that according to the first embodiment.

Specifically, as illustrated in Fig. 8, the coil unit 10 of the second embodiment has four sets of first to fourth through holes formed through the ferrite plate 13 and the coil board 14 in the stacking direction. The first through holes are radially disposed around the central axis CX to be spaced apart, the second through holes are radially disposed around the central axis CX to be spaced apart, the third through holes are radially disposed around the central axis CX to be spaced apart, and the fourth through holes are radially disposed around the central axis CX to be spaced apart.

More specifically, the four through holes include a first through-hole portion 51A, a second through-hole portion 52A, a third through-hole portion 53A, and a fourth through-hole portion 54A that are formed through the ferrite plate 13. Unillustrated four support posts, which constitute the first post structure 21, are disposed to extend through the respective first to fourth through-hole portions 51A to 54A. The first through-hole portion 51A, the second through-hole portion 52A, the third through-hole portion 53A, and the fourth through-hole portion 54A are radially arranged from the outer edge of the ferrite plate 13 toward the central axis CX in this order at equal intervals.

Each of the first, second, third, and fourth through-hole portions 51A, 52A, 53A, and 54A has an opening area in a plane orthogonal to the stacking direction. The opening areas of the first, second, third, and fourth through-hole portions 51A, 52A, 53A, and 54A are smaller as they are closer to the central axis CX. In other words, the opening areas of the first, second, third, and fourth through-hole portions 51A, 52A, 53A, and 54A in a plane orthogonal to the stacking direction are gradually smaller as they are closer to the central axis CX according to the second embodiment. That is, the opening area of the first through-hole portion 51A is the largest in all the through-hole portions 51A to 54A, and the opening areas of the second, third, and fourth through-hole portions 52A, 53A, and 54A are gradually smaller in this order. In other words, the opening area of one of the first to fourth through-hole portions 51A to 54A, which is closer to the central axis CA than an alternative one of the first to fourth through-hole portions 51A to 54A, is smaller than that of the alternative one of the first to fourth through-hole portions 51A to 54A. In other words, among the four through-hole portions provided from the outer edge toward the central axis CX, the opening(s) formed on the central-axis side have a smaller opening area, in a direction orthogonal to the stacking direction, than those formed on the outer-edge side.

The opening areas of the first, second, third, and fourth through-hole portions 51A, 52A, 53A, and 54A through which the four support posts of the second post structure 22 are disposed to extend are similar to those of the first, second, third, and fourth through-hole portions 51A, 52A, 53A, and 54A through which the four support posts of the first post structure 21 are disposed to extend. The opening areas of the first, second, third, and fourth through-hole portions 51A, 52A, 53A, and 54A through which the four support posts of the third post structure 23 are disposed to extend are similar to those of the first, second, third, and fourth through-hole portions 51A, 52A, 53A, and 54A through which the four support posts of the first post structure 21 are disposed to extend. The opening areas of the first, second, third, and fourth through-hole portions 51A, 52A, 53A, and 54A through which the four support posts of the fourth post structure 24 are disposed to extend are similar to those of the first, second, third, and fourth through-hole portions 51A, 52A, 53A, and 54A through which the four support posts of the first post structure 21 are disposed to extend.

Each of the four support posts disposed to extend through the corresponding one of the first to fourth through-hole portions 51A to 54A has a shape in conformity with the corresponding one of the first to fourth through-hole portions 51A to 54A.

The coil unit 10 of the second embodiment achieves advantageous benefits that are identical to those achieved by the coil unit 10 of the first embodiment. Additionally, the coil unit 10 of the second embodiment is configured such that, the closer the through-hole portions formed through the ferrite plate 13 to the central axis CX are, the smaller the opening areas of the through-hole portions are, making it possible to suppress magnetic saturation in the central portion of the ferrite plate 13, which includes the central axis CX and is likely to have a high magnetic density.

### Third embodiment

The following describes a coil unit 10 according to the third embodiment with reference to Fig. 9.

Like the second embodiment, the first to fourth post structures 21 to 24 are arranged point-symmetrically with respect to the central axis CX. As compared with the second embodiment, the detailed configuration of each of the first to fourth post structures 21 to 24 according to the second embodiment is different from that according to the second embodiment.

Specifically, as illustrated in Fig. 9, the coil unit 10 of the third embodiment has four sets of first to fourth through holes formed through the ferrite plate 13 and the coil board 14 in the stacking direction. The first through holes are radially disposed around the central axis CX to be spaced apart, the second through holes are radially disposed around the central axis CX to be spaced apart, the third through holes are radially disposed around the central axis CX to be spaced apart, and the fourth through holes are radially disposed around the central axis CX to be spaced apart.

More specifically, the four through hole include a first through-hole portion 61A, a second through-hole portion 62A, a third through-hole portion 63A, and a fourth through-hole portion 64A that are formed through the ferrite plate 13. Unillustrated four support posts, which constitute the first post structure 21, are disposed to extend through the respective first to fourth through-hole portions 61A to 64A. The first through-hole portion 61A, the second through-hole portion 62A, the third through-hole portion 63A, and the fourth through-hole portion 64A are radially arranged from the outer edge of the ferrite plate 13 toward the central axis CX in this order at predetermined intervals.

The opening areas of the first, second, third, and fourth through-hole portions 61A, 62A, 63A, and 64A, in a plane orthogonal to the stacking direction, are the same as one another.

The predetermined intervals include at least first and second intervals. The first interval is arranged to be closer to the outer edge of the ferrite plate 13 than the second interval, so that the second interval is arranged to be closer to the central axis CX than the first interval. The second interval is wider than the first interval.

That is, the interval between the first and second through-hole portions 61A and 62A (see reference character T1), the interval between the second and third through-hole portions 62A and 63A (see reference character T2), and the interval between the third and fourth through-hole portions 63A and 64A (see reference character T3) become wider in this order.

The predetermined intervals between adjacent ones of the first to fourth through-hole portions 61A to 64A through which the four support posts of the second post structure 22 are disposed to extend are similar to those between adjacent ones of the first to fourth through-hole portions 61A to 64A through which the four support posts of the first post structure 21 are disposed to extend. The predetermined intervals between adjacent ones of the first to fourth through-hole portions 61A to 64A through which the four support posts of the third post structure 23 are disposed to extend are similar to those between adjacent ones of the first to fourth through-hole portions 61A to 64A through which the four support posts of the first post structure 21 are disposed to extend. The predetermined intervals between adjacent ones of the first to fourth through-hole portions 61A to 64A through which the four support posts of the third post structure 23 are disposed to extend are similar to those between adjacent ones of the first to fourth through-hole portions 61A to 64A through which the four support posts of the first post structure 21 are disposed to extend. The predetermined intervals between adjacent ones of the first to fourth through-hole portions 61A to 64A through which the four support posts of the fourth post structure 24 are disposed to extend are similar to those between adjacent ones of the first to fourth through-hole portions 61A to 64A through which the four support posts of the first post structure 21 are disposed to extend.

Each of the four support posts disposed to extend through the corresponding one of the first to fourth through-hole portions 61A to 64A has a shape in conformity with the corresponding one of the first to fourth through-hole portions 61A to 64A.

The coil unit 10 of the third embodiment achieves advantageous benefits that are identical to those achieved by the coil unit 10 of the first embodiment. Additionally, the coil unit 10 of the third embodiment is configured such that the intervals between adjacent ones of the through-hole portions formed through the ferrite plate 13 become gradually wider from the outer-edge side of the ferrite plate 13 toward the central axis CX, making it possible to suppress magnetic saturation in the central portion of the ferrite plate 13, which includes the central axis CX and is likely to have a high magnetic density.

### Fourth embodiment

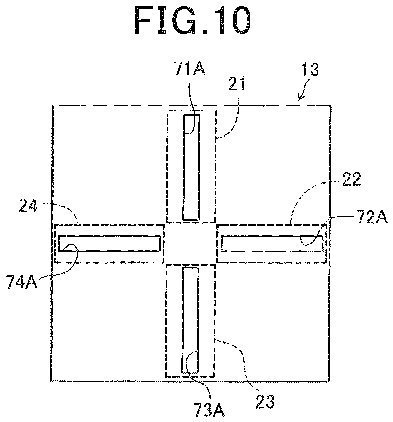

The following describes a coil unit 10 according to the fourth embodiment with reference to Fig. 10.

The coil unit 10 of the fourth embodiment is substantially identical to that of the first embodiment except for the following point.

Specifically, as illustrated in Fig. 10, the first post structure 21 includes a single through-hole portion 71A and an unillustrated first support post, and the second post structure 22 includes a single through-hole portion 72A and an unillustrated second support post. Similarly, the third post structure 23 includes a single through-hole portion 73A and an unillustrated third support post, and the fourth post structure 24 includes a single through-hole portion 74A and an unillustrated fourth support post.

Each of the through-hole portions 71A, 72A, 73A, and 74A has a substantially rectangular shape whose longitudinal direction extends from the outer edge of the ferrite plate 13 to the central axis CX. Similarly, each of the first to fourth support posts has a substantially rectangular shape whose longitudinal direction extends from the outer edge of the ferrite plate 13 to the central axis CX.

Specifically, each of the four through-hole portions 71A, 72A, 73A, and 74A is formed as a slit, and the four through-hole portions 71A, 72A, 73A, and 74A are radially arranged around the central axis CX. Each of the four support posts disposed to extend through the corresponding one of the first to fourth through-hole portions 71A to 74A has a shape in conformity with the corresponding one of the first to fourth through-hole portions 71A to 74A. Specifically, each of the four support posts has a substantially rectangular column shape.

The coil unit 10 of the fourth embodiment achieves advantageous benefits that are identical to those achieved by the coil unit 10 of the first embodiment. Additionally, the coil unit 10 of the fourth embodiment is configured such that each of the four support posts continuously extends from the outer edge of the ferrite plate 13 toward the central axis CX, making it possible to improve the strength of each support post and therefore improve the strength of the housing 11 itself.

### Fifth embodiment

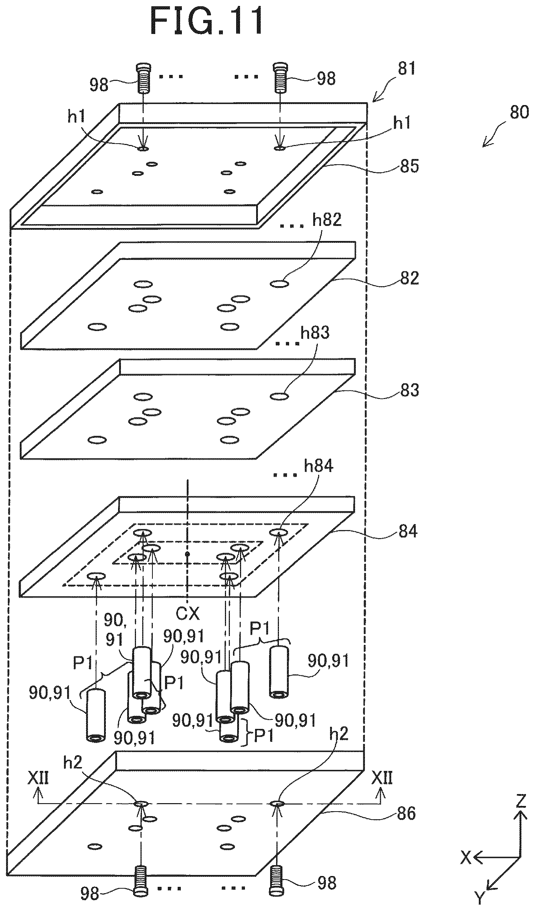

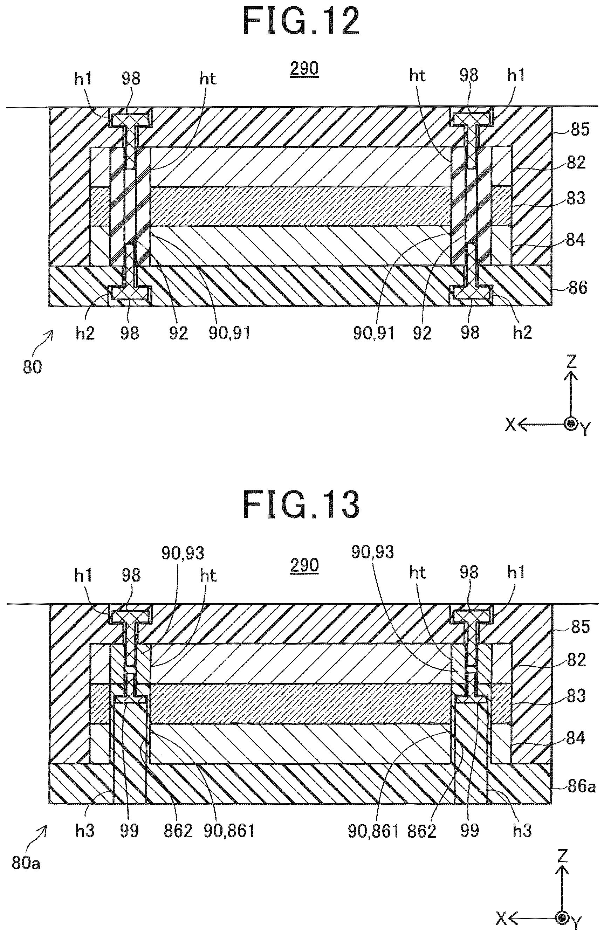

A coil unit 80 according to the fifth embodiment illustrated in Figs. 11 and 12, which differs from the coil unit 10 of each of the first to fourth embodiments, is included in the power-reception side, i.e., vehicle 200. The coil unit 80 constitutes a part of the power reception device 205, and includes the power reception circuit 220 and at least the power reception coil 212 of the power reception resonance circuit 210. The coil unit 80 may constitute the whole of the power reception device 205. Fig. 12 is a cross-sectional view of the coil unit 80 taken along line XII-XII of Fig. 11.

The coil unit 80 includes a housing 81, an aluminum plate 82, a magnetic-material plate 83, a board-like coil 84 having opposing upper and lower surfaces, four post structures P1, a plurality of first screws 98, and a plurality of second screws 98.

The housing 81 includes an upper casing 85 and a lower casing 86. Each of the upper and lower casings 85 and 86 has non conductivity, and is formed of a non-magnetic material, such as resin. The joint boundary between the upper and lower casings 85 and 86 in the vertical direction is arranged to be flush with the lower surface of the lower casing 86 (see Fig. 12). The lower casing 86 has a substantially flat plate-like shape. The upper casing 85 has a substantially flat plate-like shape and has sidewalls projecting downward from the respective outer edges thereof. The upper casing 85 and the lower casing 86 are attached to each other while lower end surfaces of the sidewalls of the upper casing 85 are abutted onto the upper surface of the lower casing 86 by unillustrated one or more securing members to constitute the housing 81. In the housing 81, the aluminum plate 82, the magnetic-material plate 83, and the board-like coil 84 are housed while being stacked.

The upper casing 85 of the fifth embodiment is mounted on the bottom 290 of the body of the vehicle 200. This results in the coil unit 80 being exposed outward from the vehicle 200. The lower surface of the lower casing 86 is arranged to face the road RS, so that the lower surface of the lower casing 86 is capable of facing the power transmission coil 112 of the power transmission device 100.

The upper casing 85 has eight threaded holes h1 formed therethrough. Similarly, the lower casing 86 has eight threaded holes h2 formed therethrough in alignment with the respective eight threaded holes h1. The first screws 98 are threadably received in the respective threaded holes h1 to extend therefrom, and the second screws 98 are threadably received in the respective threaded holes h2 to extend therefrom. The first screws 98 are threadably engaged with respective post members 91 described later. Similarly, the second screws 98 are threadably engaged with the respective post members 91. The lower casing 86 serves as a first casing of the present disclosure, and the upper casing 85 serves as a second casing of the present disclosure.

The aluminum plate 82 has substantially the same configuration as that of the aluminum plate 12 of the first embodiment. In particular, the aluminum plate 82 has eight through-hole portions h82 formed therethrough in the vertical direction corresponding to its thickness direction in alignment with the respective threaded holes h1.

The magnetic-material plate 83 has substantially the same configuration as that of the ferrite plate 13 of the first embodiment. In particular, the magnetic-material plate 83 has eight through-hole portions h83 formed therethrough in the vertical direction corresponding to its thickness direction. The magnetic-material plate 83 is formed of ferrite, but may be formed of any material having magnetic property.

The coil 84 has substantially the same configuration as that of the coil board 14 of the first embodiment. In particular, the coil 84 has eight through-hole portions h84 formed therethrough in the vertical direction corresponding to its thickness direction.

The through-hole portions h82 of the aluminum plate 82 align with the respective through-hole portions h83 of the magnetic-material plate 83 in the vertical direction, and the through-hole portions h83 of the magnetic-material plate 83 align with the respective through-hole portions h84 of the coil 84 in the vertical direction. Each of the through-hole portions h82 to h84 has the same dimensions. This results in eight through holes ht being formed through the aluminum plate 82, the magnetic-material plate 83, and the coil 84.

Each of the four post structures P1 illustrated in Fig. 11 includes two support posts 90. Each support post 90 is comprised of a single post member 91. Each post member 91 according to the fifth embodiment is formed of a non-conductive and non-magnetic material. Each support post 90, i.e., each post member 91, is, as illustrated in Fig. 12, arranged to be received in the corresponding one of the through holes ht. This results in each post structures P1 extending from the lower casing 86 to the upper casing 85 while penetrating through the aluminum plate 82, the magnetic-material plate 83, and the coil 84, thus combining the lower casing 86 and the upper casing 85 with one another.

Additionally, like the first to fourth post structures 21 to 24 of the first embodiment, the four post structures P1 are radially arranged around the central axis CX at equal intervals of 90 degrees. The four post structures P1 are arranged point-symmetrically with respect to the central axis CX as viewed in the stacking direction. Each post member 91 has opposing upper and lower ends and has a substantially tubular cylindrical shape with an axial hole 92 extending therethrough in its axial direction. The axial hole 92 has a threaded inner periphery and opposing upper and lower ends.

Each threaded hole h1 formed through the upper casing 85 has a stepped cross-sectional structure with portions of different diameters, as illustrated in Fig. 12. Each first screw 98 is received in the corresponding threaded hole h1 such that a threaded end of the corresponding first screw 98 extends from the corresponding threaded hole h1 to reach the upper end of the axial hole 92 of the corresponding post member 91. The threaded end of each first screw 98 is engaged with the threaded portion of the upper end of the axial hole 92 of the corresponding post member 91, so that the upper end of each post member 91 is fixedly joined to the upper casing 85. Similarly, each threaded hole h2 formed through the lower casing 86 has a stepped cross-sectional structure with portions of different diameters, as illustrated in Fig. 12. Each second screw 98 is received in the corresponding threaded hole h2 such that a threaded end of the corresponding second screw 98 extends from the corresponding threaded hole h2 to reach the lower end of the axial hole 92 of the corresponding post member 91. The threaded end of each second screw 98 is engaged with the threaded portion of the lower end of the axial hole 92 of the corresponding post member 91, so that the lower end of each post member 91 is fixedly joined to the lower casing 86.

Threadable engagement of the upper end of each post member 91 with the corresponding first screw 98 and threadable engagement of the lower end of the corresponding post member 91 with the corresponding second screw 98 cause (I) the corresponding post member 91 to be secured in the coil unit 80 and (II) the upper and lower casings 85 and 86 to apply, to the aluminum plate 82, the magnetic-material plate 83, and the coil 84, force of sandwiching them in the vertical direction. The sandwiching of the aluminum plate 82, the magnetic-material plate 83, and the coil 84 fastens them.

The following describes a method of assembling the coil unit 80 and of installing the coil unit 80 to the vehicle 200.

First, the method fastens the support posts 90 to the lower casing 86 using the second screws 98. Next, the method arranges the coil 84, the magnetic-material plate 83, and the aluminum plate 82 over the lower casing 86 in this order while inserting each support post 90 into the corresponding through hole of each of the coil 84, the magnetic-material plate 83, and the aluminum plate 82, thus stacking the coil 84, the magnetic-material plate 83, and the aluminum plate 82 over the lower casing 86. Next, the method fastens the support posts 90 to the upper casing 85 using the first screws 98, thus completing the coil unit 80. Then, the method installs the coil unit 80 completed set forth above to the bottom 290 of the vehicle 200. For example, the method may fasten the coil unit 80 to previously provided protrusions of the bottom 290 of the body of the vehicle 200 using screws.

The above method, which fastens the support posts 90 to the lower casing 86 first, and thereafter arranges the components 84, 83, and 82 over the lower casing 86, makes it possible to use the support posts 90 as positioning members for arranging the components 84, 83, and 82 over the lower casing 86.

The coil unit 80 of the fifth embodiment achieves advantageous benefits that are identical to those achieved by the coil unit 10 of the first embodiment.

Specifically, the coil unit 80 of the fifth embodiment is configured such that the post structures P1 are each arranged along a corresponding respective direction in which a portion of the magnetic flux flows from the outer edge of the magnetic-material plate 83 toward the central axis CX through the magnetic-material plate 83 and are separated from one another around the central axis CX as viewed in the stacking direction. The flow of the magnetic flux from the outer edge of the magnetic-material plate 83 toward the central axis CX may be impeded through the post structures P1.

However, the flow of the magnetic flux from either one of the outer edge of the magnetic-material plate 83 and the central axis CX toward the other thereof is ensured through the regions of the magnetic-material plate 83 located between the post structures P1 that are separated from one another around the central axis CX.

Additionally, the support posts 90, i.e., the post members 91, improve the strength of the housing 81.

Accordingly, the coil unit 80 according to the fifth embodiment makes it possible to improve the strength of the housing 81 while maintaining the magnetic-flux flow smoothly to thereby maintain the power transfer performance thereof.

The coil unit 80 of the fifth embodiment is configured such that the post structures P1 are arranged point-symmetrically with respect to the central axis CX as viewed in the stacking direction. This configuration therefore makes it possible to efficiently transfer power with less impeding of the magnetic-flux flow through the magnetic-material plate 83.

The coil unit 80 of the fifth embodiment is configured such that the shape and size of the cross section of each of the support posts 90 in the direction orthogonal to the stacking direction is substantially the same as those of the cross section of the corresponding one of the through holes ht in the direction orthogonal to the stacking direction. This configuration therefore makes it easier to ensure regions of the magnetic-material plate 83 through which the magnetic flux flows as compared with the configuration where the size of the cross section of each of the support posts 90 in the direction orthogonal to the stacking direction is larger than that of the cross section of the corresponding one of the through holes ht.

The coil unit 80 is mounted to the bottom 290 of the body of the vehicle 200, so that load is applied thereto vertically downward due to its own weight.

From this viewpoint, the coil unit 80 is configured such that both ends of each support post 90, which penetrates through the aluminum plate 82, the magnetic-material plate 83, and the coil 84, are joined to the respective upper and lower casings 85 and 86. This configuration therefore prevents, even if the above load is applied to the coil unit 80, one or more components of the coil unit 80 from bending or falling downward, thus improving the strength, i.e., resistance, of the coil unit 80 against the load.

### Sixth embodiment

A coil unit 80a of the sixth embodiment illustrated in Fig. 13 is substantially identical to that of the fifth embodiment except for the following points.

Specifically, the coil unit 80a includes a lower casing 86a in place of the lower casing 86, spacer members 93 in place of the post members 91, and second screws 99 to be received in the lower casing 86a in place of the second screws 98. The lower casing 86a includes protrusions 861 described later.

Reference characters used for the components of the coil unit 80 of the fifth embodiment are assigned to the substantially same components of the coil unit 80a of the sixth embodiment, and therefore the detailed descriptions for the same components of the coil unit 80a of the sixth embodiment are omitted.

In particular, each support post 90 of the coil unit 80 according to the fifth embodiment is comprised of the single post member 91. In contrast, each support post 90 of the coil unit 80a according to the sixth embodiment is comprised of the corresponding one of the spacer members 93 and the corresponding one of the protrusions 861.

The lower casing 86a includes the protrusions 861. Each protrusion 861 is comprised of a tubular cylindrical sidewall 862. Each protrusion 861 is so received in the corresponding through-hole portion h84 of the coil 84 and the corresponding through-hole portion h83 of the magnetic-material plate 83 as to be in contact therewith. That is, each protrusion 861 penetrates through the corresponding through-hole portion h84 and the corresponding through-hole portion h83 of the corresponding through hole ht in the stacking direction. The protrusions 861 of the lower casing 86a are integrally formed with the other portions of the lower casing 86a. That is, the protrusions 861 are formed of a non-conductive resin, which is similar to the material of the lower casing 86a. The upper end of each protrusion 861 is located to be flush with the upper surface of the magnetic-material plate 83 in the stacking direction.

The lower casing 86a has threaded holes h3 in place of the threaded holes h2. Each threaded hole h3 is formed in the corresponding protrusion 861 so as to extend in the stacking direction and open at the lower surface of the lower casing 86a. Like the threaded hole h2, each threaded hole h3 has a stepped cross-sectional structure with portions of different diameters, as illustrated in Fig. 13. Each screw 99 is received in the corresponding threaded hole h3. The size of the screw 99 is smaller than that of the screw 98. In place of the screws 99, the screws 98 may be used. In this modification, the size of each threaded hole h3 may be larger.

Each spacer member 93 is disposed in a predetermined portion of the corresponding one of the through holes ht, which corresponds to the aluminum plate 82. That is, each spacer member 93 is disposed in the through-hole portion h82 of the corresponding one of the through holes ht. Each spacer member 93 has a substantially tubular cylindrical shape with an axial hole extending therethrough in its axial direction. The axial hole has threaded inner periphery. Each spacer member 93 is formed of a metal having a higher strength than the material of the aluminum plate 82. Specifically, each spacer member 93 of the sixth embodiment is formed of an aluminum alloy. Each spacer member 93 may be formed of any metal, such as stainless steel, in place of the aluminum alloy.

The threaded end of each screw 98 is received in an upper portion of the threaded hole of the corresponding spacer member 93 so as to be engaged with the upper portion of the threaded hole of the corresponding spacer member 93. The threaded end of each screw 99, which projects from the upper end of the corresponding protrusion 861, is received in a lower portion of the threaded hole of the corresponding spacer member 93 so as to be engaged with the lower portion of the threaded hole of the corresponding spacer member 93. The thickness of each spacer member 93, that is, the dimension of each spacer member 93 in the vertical direction, i.e., the stacking direction, is the same as that of the aluminum plate 82. Each spacer member 93 is arranged in contact with an upper end surface of the corresponding protrusion 861. This results in a lower end surface of each spacer member 93 in the stacking direction being flush with the upper surface of the aluminum plate 82.

Each support post 90 according to the sixth embodiment is comprised of the corresponding protrusion 861 and the corresponding spacer member 93 that are located adjacent to one another in the stacking direction. The metallic spacer member 93 of each through hole ht is located in the aluminum plate 82. This prevents, even if the metallic spacer member 93 is used to constitute the corresponding support post 90, blocking of the magnetic flux by the metallic spacer member 93. In addition, the metallic spacer members 93 each used to constitute the corresponding support post 90 increase the strength of the corresponding support post 90, making it possible to improve the resistance of the coil unit 80a against load applied thereto.

The coil unit 80a of the sixth embodiment achieves the advantageous benefits that are identical to those achieved by the coil unit 80 of the fifth embodiment.

Additionally, the coil unit 80a includes the spacer members 93, each of which constitutes a part of the corresponding one of the support posts 90. This configuration therefore increases the strength of the corresponding support post 90, making it possible to improve the resistance of the coil unit 80a against load applied thereto. The metallic spacer member 93 of each through hole ht is located in the aluminum plate 82. This prevents blocking of the magnetic flux by the metallic spacer member 93 as compared with the configuration that the metallic spacer member of each through hole ht is located in the magnetic-material plate 83 or the coil 84.

### Seventh embodiment

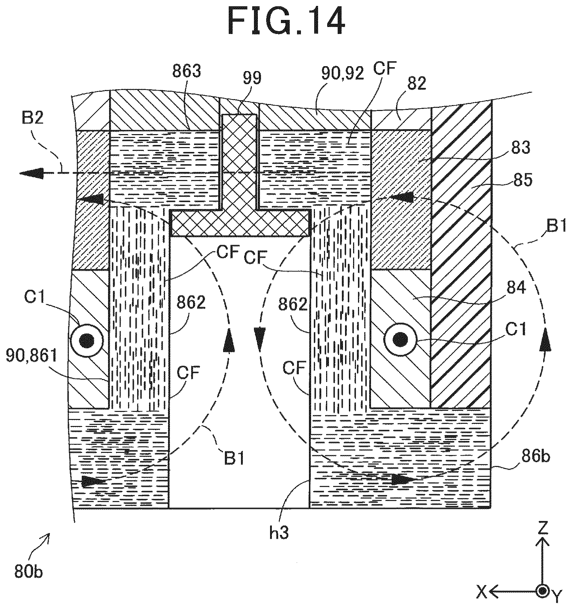

A coil unit 80b according to the seventh embodiment illustrated in Fig. 14, which differs from the coil unit 80a of the sixth embodiment, includes a lower casing 86b in place of the lower casing 86a. Reference characters used for the components of the coil unit 80a of the sixth embodiment are assigned to the substantially same components of the coil unit 80b of the seventh embodiment, and therefore the detailed descriptions for the same components of the coil unit 80b of the seventh embodiment are omitted.

The lower casing 86b is formed of a resin containing reinforced fibers. As the reinforced fibers according to the seventh embodiment, carbon fibers CF are used. In place of the carbon fibers CF, any type of fibers, such as glass fibers, may be used as the reinforced fibers.

Each protrusion 861 is comprised of the tubular cylindrical sidewall 862 and a tubular cylindrical end portion 863. The tubular cylindrical sidewall 862 defines the large-diameter portion of the threaded hole h3 thereinside. The tubular cylindrical end portion 863 is included in the magnetic-material plate 83 and defines the small-diameter portion of the threaded hole h3 thereinside. The tubular cylindrical end portion 863 is located in contact with an upper end of the tubular cylindrical sidewall 862 to cover the large-diameter portion of the threaded hole h3.

In particular, the arrangement direction of the carbon fibers CF constituting the tubular cylindrical sidewall 862 of each protrusion 861 is different from that of the carbon fibers CF constituting the tubular cylindrical sidewall 862 of the corresponding protrusion 861.

The arrangement direction of the carbon fibers CF means the longitudinal directions of the carbon fibers CF. The arrangement direction of the carbon fibers CF constituting the tubular cylindrical sidewall 862 is substantially parallel to the vertical direction, which will also be referred to as a Z-axis direction. In contrast, the arrangement direction of the carbon fibers CF constituting the tubular cylindrical end portion 863 is substantially parallel to a first radial direction extending from the outer edge of the magnetic-material plate 83 toward the central axis CX and a second radial direction that is opposite to the first radial direction. For example, during insert molding for manufacturing the lower casing 86b, adjustment of (i) the position of resin insertion port into the cavity of a mold and/or (ii) the direction of the resin flowing direction into the cavity enables the arrangement direction of the carbon fibers CF to be adjusted.

The following describes the reason why the arrangement direction of the carbon fibers CF in the lower casing 86b are adjusted set forth above.

A current flowing through a conductive wire C1 constituting the coil 84 induces magnetic flux around the conductive wire C1. The direction of a portion B1 of the magnetic flux flowing in the vicinity of the tubular cylindrical sidewall 862 is indicated by a dashed arrow in Fig. 14. The direction of the portion B1 of the magnetic flux flowing in the vicinity of the tubular cylindrical sidewall 862 is substantially vertical. For this reason, setting the arrangement direction of the carbon fibers CF constituting the tubular cylindrical sidewall 862 substantially to the vertical direction enables reduction in generation of eddy current, thus reducing eddy-current loss.

In the magnetic-material plate 83, a first portion B2 of the magnetic flux is induced by the current flowing through the conductive wire C1 in the first radial direction that extends from the outer edge of the magnetic-material plate 83 toward the central axis CX, and a second portion of the magnetic flux is induced by the current flowing through the conductive wire C1 in the second magnetic direction that is opposite to the first radial direction. A dashed arrow schematically indicates the direction of the first portion B2 of the magnetic flux in Fig. 14. Setting the arrangement direction of the carbon fibers CF constituting the tubular cylindrical end portion 863 to be parallel to the direction the first portion B2 of the magnetic flux enables reduction in generation of eddy current, thus reducing eddy-current loss.

The coil unit 80b of the seventh embodiment achieves the advantageous benefits that are identical to those achieved by the coil unit 80a of the sixth embodiment.

Additionally, the coil unit 80b is configured such that the lower casing 86b is formed of a resin containing the carbon fibers CF and the longitudinal directions of the carbon fibers CF constituting each protrusion 861 are arranged substantially along magnetic fluxes induced by the current flowing through the conductive wire C1. This therefore reduces generation of eddy current, thus reducing eddy-current loss.

### Eighth embodiment

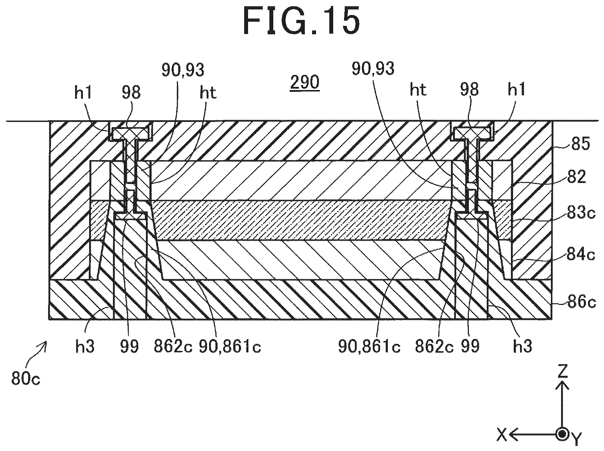

A coil unit 80c according to the eighth embodiment illustrated in Fig. 15, which differs from the coil unit 80a of the sixth embodiment, includes a lower casing 86c in place of the lower casing 86a, and a magnetic-material plate 83c in place of the magnetic-material plate 83. Reference characters used for the components of the coil unit 80a of the sixth embodiment are assigned to the substantially same components of the coil unit 80c of the eighth embodiment, and therefore the detailed descriptions for the same components of the coil unit 80c of the eighth embodiment are omitted.

The lower casing 86c includes protrusions 861c in place of the protrusions 861 of the sixth embodiment. Each protrusion 861 of the sixth embodiment is comprised of the tubular cylindrical sidewall 862. In contrast, each protrusion 861c of the eighth embodiment is comprised of a tubular cylindrical sidewall 862c, and is tapered upward in the stacking direction such that the area of the cross section of the tubular cylindrical sidewall 862c orthogonal to the stacking direction becomes smaller in the upward of the stacking direction. The size of the threaded hole h3 according to the eighth embodiment is the same as that of the threaded hole h3 according to the sixth embodiment. That is, the thickness of the tubular cylindrical sidewall 862c in an X-axis direction that is orthogonal to the stacking direction gradually decreases upward.

The magnetic-material plate 83c differs from the magnetic plate 83 in the following point that the magnetic-material plate 83c includes a through hole formed therethrough in place of the through-hole portion h83. The through hole of the magnetic-material plate 83c has an opening area that becomes smaller in the upward direction. The coil 84c differs from the coil 84 in the following point that the coil 84c includes a through hole formed therethrough in place of the through-hole portion h84. The through hole of the coil 84c has an opening area that becomes smaller in the upward direction.

The appearance configuration of each protrusion 861c has a tapered shape that the area of the cross section of the corresponding protrusion 861c orthogonal to the stacking direction becomes smaller in the upward of the stacking direction. This therefore enables each through hole of the coil 84c and each through hole of the magnetic-material plate 84 to be easily inserted into the corresponding protrusion 861c during assembling of the coil unit 80c. Accordingly, this configuration of the coil unit 86c enables easy determination of the positioning of each of the magnetic-material plate 83c and the coil 84c during assembling of the coil unit 86c, making it possible to improve the working efficiency of manufacturing the coil unit 86c.

Additionally, the configuration of the coil unit 80c according to the eighth embodiment enables easy adjustment of the position of each of the magnetic-material plate 83c and coil 84 in the stacking direction. Specifically, let us assume that a predetermined dimensional gap is ensured between the lower surface of the coil 84c and the upper surface of the lower casing 86c. In this assumption, adjusting the dimensions of each through hole of the coil 84c and the taper angle of each protrusion 861c to adjust the position of the coil 84c in the stacking direction enables easy adjustment of the size of the gap.

### Ninth embodiment

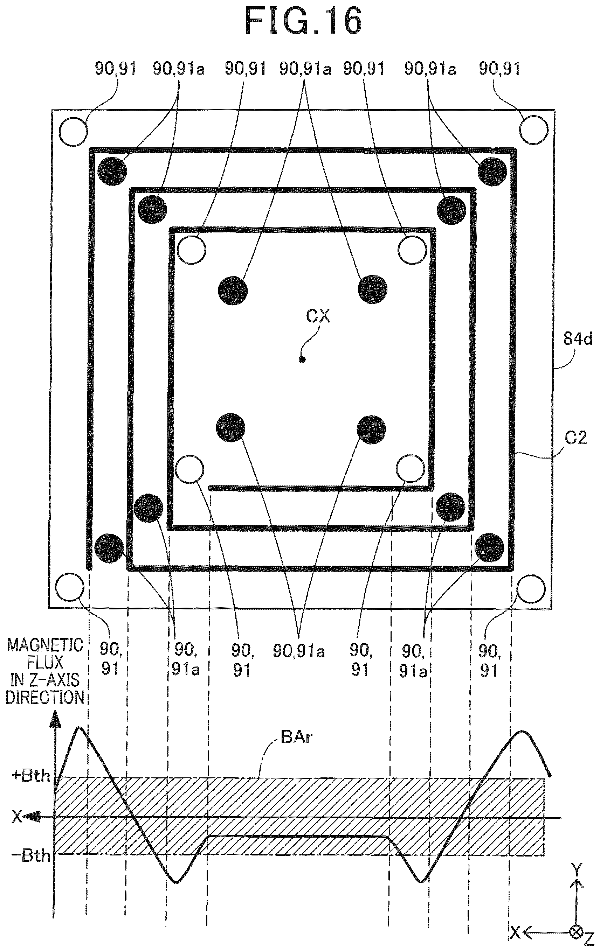

A coil unit 80 according to the ninth embodiment illustrated in Fig. 16, which differs from the coil unit 80 of the fifth embodiment, includes a board-like coil 84d in place of the coil 84. Additionally, the coil unit 80 of the ninth embodiment is configured such that
(I) The number of the support posts 90 is greater than that of the support posts 90 of the coil unit 80 of the fifth embodiment; and
(II) At least a portion (i.e., some) of the support posts 90 include a post member 91a in place of the post member 91 of the fifth embodiment.

Reference characters used for the components of the coil unit 80 of the fifth embodiment are assigned to the substantially same components of the coil unit 80 of the ninth embodiment, and therefore the detailed descriptions for the same components of the coil unit 80 of the ninth embodiment are omitted.

The coil 84d of the ninth embodiment is a coil of substantially three turns formed by spirally winding a conductive wire C2. Four post structures are radially arranged around the central axis CX at equal intervals of 90 degrees as illustrated in Fig. 16. Each post structure illustrated in Fig. 16 includes five support posts 90.

One of the five support posts 90, which will be referred to as a fifth support post 90, is located outside the outermost turn, i.e., the third turn, of the coil 84d. One of the five support posts 90, which will be referred to as a fourth support post 90, is located between the third turn and the second turn of the coil 84d located radially inward with respect to the third turn. One of the five support posts 90, which will be referred to as a third support post 90, is located between the second turn and the first turn, i.e., the innermost turn, of the coil 84d located radially inward with respect to the second turn. The remaining two support posts 90, which will be referred to as first and second support posts 90, are radially located inside the innermost turn of the coil 84d. The second support post 90 is located adjacently inside the innermost turn of the coil 84d, and the first support post 90 is located adjacently inside the second support posts 90 as illustrated in Fig. 16.

Among the first to fifth support posts 90 of each post structure, each of the second and fourth support posts 90, which are schematically illustrated by white circular marks, includes the post member 91 that is identical to the post member 91 of the fifth embodiment. This therefore results in the post member 91 of each of the second and fourth support posts 90 being formed of a non-conductive resin.

In contrast, each of the first, third, and fifth support posts 90, which are schematically illustrated by black circular marks, includes the post member 91a that has the same configuration as that of the post member 91 but is formed of a conductive material that is different from the post member 91. Specifically, the post member 91a of each of the first, third, and fifth support posts 90 is formed of an aluminum alloy according to the ninth embodiment. The post member 91a may be formed of any conductive material, such as stainless steel or any type of metal.

A Y-axis direction is perpendicular to the X-axis direction and Z-axis direction. The lower side of Fig. 16 illustrates a graph showing the temporal variation of the Z-axis component of the magnetic flux along the X-axis direction; the magnetic flux is induced around the coil 84d, which is wound in a spiral pattern in the XY plane. Energization of the conductive wire C2 of the coil 84d generates the magnetic flux around the conductive wire C2.

The temporal variation of the Z-axis component of the magnetic flux has a first local peak located slightly outside of each portion of the outermost turn of the conductive wire C2, and a second local peak located slightly inside of each portion of the innermost turn of the conductive wire C2.

Additionally, a part of the temporal variation of the Z-axis component of the magnetic flux along the X-axis direction, which is located between the outermost turn and the lowermost turn, is maintained within a predetermined magnitude range BAr. This is because, between the outermost turn and the lowermost turn, the Z-axis component of the magnetic flux created around one of the adjacent turns of the conductive wire C2 and the Z-axis component of the magnetic flux created around the other of the adjacent turns of the conductive wire C2 cancel each other.

Similarly, a part of the temporal variation of the Z-axis component of the magnetic flux along the X-axis direction, which is located inside the innermost turn, is maintained within the predetermined magnitude range BAr. This is because, inside the innermost turn, no turns of the conductive wire C2 are provided.

The predetermined magnitude range BAr is defined between a lower-limit threshold -Bth and an upper-limit threshold +Bth. The lower-limit threshold -Bth is defined to be lower than the first local peak located slightly outside of each portion of the outermost turn of the conductive wire C2. The upper-limit threshold +Bth is defined to be higher than the first local peak located slightly inside of each portion of the innermost turn of the conductive wire C2.

The support posts 91 of each four post structure, which are located within the magnitude range BAr of the magnetic flux to be induced around the coil 84d (see black circular marks), are each comprised of the metallic post member 91a. Additionally, the support posts 91 of each four post structure, which are located outside the magnitude range BAr of the magnetic flux to be induced around the coil 84d, are each comprised of the resinous post member 91.

The metallic post members 91a located within the magnitude range BAr of the magnetic flux to be induced around the coil 84d make it possible to improve the resistance of the coil unit 80 against load applied thereto due to its own weight. Additionally, the metallic post members 91a located within the magnitude range BAr of the magnetic flux to be induced around the coil 84d make it possible to maintain eddy-current loss at a relatively low level, because the magnitude of the magnetic flux within the magnitude range BAr is relatively low.

In contrast, the resinous post members 91 located outside the magnitude range BAr of the magnetic flux to be induced around the coil 84d makes it possible to prevent excessive eddy-current loss outside the magnitude range BAr of the magnetic flux to be induced around the coil 84d.

The coil unit 80 of the ninth embodiment achieves the advantageous benefits that are identical to those achieved by the coil unit 80 of the fifth embodiment.

Additionally, the coil unit 80 of the ninth embodiment is configured such that the metallic post members 91 are used within the magnitude range BAr of the magnetic flux to be induced around the coil 84d. This configuration therefore makes it possible to improve the resistance of the coil unit 80 against load applied thereto due to its own weight while maintaining eddy-current loss at a relatively low level.

The coil unit 80 of the ninth embodiment is also configured such that the resinous post members 91 are used outside the magnitude range BAr of the magnetic flux to be induced around the coil 84d. This configuration therefore makes it possible to prevent excessive eddy-current loss outside the magnitude range BAr of the magnetic flux to be induced around the coil 84d.

### Modifications

The post structures 21, 22, 23, and 24 of each of the first to fourth embodiments are arranged point-symmetrically with respect to the central axis CX as viewed in the stacking direction, and similarly the post structures P1 of each of the fifth to ninth embodiments are arranged point-symmetrically with respect to the central axis CX as viewed in the stacking direction. However, the present disclosure is not limited to the above arrangement.

Specifically, the post structures 21, 22, 23, and 24 or the post structures P1 may be arranged around the central axis CX without being point-symmetrically with respect to the central axis CX. A plurality of post structures except for four, such as two, three, or five or more post structures may be arranged around the central axis CX. The post structures may be arranged around the central axis CX at irregular angles.

Each of the post structures 21, 22, 23, 24, and P1 according to the corresponding embodiment may have any number of through holes and any number of support posts.

The second embodiment and the third embodiment may be combined with each other. Specifically, the opening areas of the first, second, third, and fourth through-hole portions in a direction orthogonal to the stacking direction, may be smaller as they are closer to the central axis CX, and the predetermined intervals between adjacent ones of the first to fourth through-hole portions may be progressively wider toward the central axis CX.

The opening area of the first through-hole portion 51A is the largest in all the through-hole portions 51A to 54A, and the opening areas of the second, third, and fourth through-hole portions 52A, 53A, and 54A are gradually smaller in this order toward the central axis CX according to the second embodiment. As a modification of the second embodiment, the opening areas of the first and second through-hole portions 51A and 52A may be identical to one another, the opening areas of the third and fourth through-hole portions 53A and 54A may be identical to one another, and the opening areas of the third and fourth through-hole portions 53A and 54A may be smaller than those of the first and second through-hole portions 51A and 52A.

In each embodiment, each of the through-hole portions and the corresponding one of the support posts may have a selected one of various cross-sectional shapes including a precise circular shape, a rectangular shape, an ellipsoidal shape, and a polygonal shape. The cross-sectional shape of each of the support posts and the corresponding one of the through-hole portions and the corresponding one of the support posts may be different from one another as long as each of the support posts can be inserted into the corresponding one of the through-hole portions.

The first and second support posts 31 and 32 are integrally formed with the upper casing 15 of the housing 11 according to each of the first to fourth embodiments, but may be separately formed from the upper casing 15. For example, the housing 11 and the first and second support posts 31 and 32 may be individually manufactured, and the first and second support posts 31 and 32 may be adhered to the housing 11. Then, the ferrite plate 13 and the coil board 14 may be assembled to the housing 11. Alternatively, the first and second support posts 31 and 32 may be integrated with the lower casing 16 of the housing 11 or may be integrally molded with the aluminum plate 12.

Although the first to fourth embodiments describe a power-transmission coil unit as the coil units 10, the patentable concepts disclosed herein may be equally applicable to power-reception coil units. Although the fifth to ninth embodiments describe a power-reception coil unit as the coil units 80, 80a, 80b, 80c, the patentable concepts disclosed herein may be equally applicable to a power-transmission coil units.

The first to fourth through-hole portions 71A to 74A according to the fourth embodiment may be gradually or stepwisely tapered from the outer edge of the ferrite plate 13 toward the central axis CX such that the opening areas of the first to fourth through-hole portions 71A to 74A become gradually smaller toward the central axis CX.

The slit-like through-hole portions 71A, 72A, 73A, and 74A according to the fourth embodiment may be joined to one another at the center of the ferrite plate 13.

The component, such as the post member 91, the protrusion 91a, the spacer member 93, or the combination of the spacer member 93 and the protrusion 861 or 861a, of each support post 90 described in the fifth to ninth embodiments is attached to the upper casing 85 or the lower casing 86, 86a with the screws 98 and/or 99, but the present disclosure is not limited thereto. Specifically, the component of each support post 90 described in the fifth to ninth embodiments may be attached to the upper casing 85 or the lower casing 86, 86a using any method, such as press fitting, crimping, or adhesive.

The spacer members 93 may be omitted in each of the sixth to eighth embodiments. Each protrusion 861, 861c according to this modification may be configured to be so long in the stacking direction as to abut onto the lower surface of the upper casing 85. This configuration results in each support post 90 being comprised of only the corresponding protrusion 861, 861c. In this modification, at least one support post 90 may be comprised of only the corresponding protrusion 861, 861c, and each of the remaining support posts 90 may include the configuration described in one of the sixth to eighth embodiments.

The arrangement directions of the carbon fibers CF constituting the tubular cylindrical sidewall 862 are substantially parallel to the vertical direction, i.e., the Z-axis direction, according to the seventh embodiment, but the present disclosure is not limited thereto. Specifically, at least portion (i.e., some) of the carbon fibers CF constituting the tubular cylindrical sidewall 862 may be arranged to satisfy a predetermined angular condition. The predetermined angular condition means that an angle made between (i) the averaged direction of the at least portion of the carbon fibers CF and (ii) the direction of the components B1 of the magnetic flux, which will be referred to as a magnetic-flux direction, induced by the coil 84 is smaller than or equal to 45 degrees. The averaged direction of the at least portion of the carbon fibers CF is defined as an average of the longitudinal directions of the at least portion of the carbon fibers CF.

The at least portion of the carbon fibers CF constituting the tubular cylindrical sidewall 862, which are arranged such that the angle made between (i) the averaged direction of the at least portion of the carbon fibers CF and (ii) the magnetic-flux direction induced by the coil 84 is smaller than or equal to 45 degrees, enables reduction in generation of eddy current as compared with the case where the angle is greater than 45 degrees.

Similarly, the arrangement directions of the carbon fibers CF constituting the tubular cylindrical end portion 863 are substantially parallel to the first radial direction extending from the outer edge of the magnetic-material plate 83 toward the central axis CX and the second radial direction that is opposite to the first radial direction, but the present disclosure is not limited thereto. Specifically, at least portion (i.e., some) of the carbon fibers CF constituting the tubular cylindrical end portion 863 may be arranged to satisfy the predetermined angular condition described above. That is, the predetermined angular condition means that an angle made between (i) the averaged direction of the at least portion of the carbon fibers CF and (ii) the direction of the components B1 of the magnetic flux induced by the coil 84 is smaller than or equal to 45 degrees.

Any configuration of each protrusion 861, at least part of the carbon fibers CF of which are arranged to satisfy the above predetermined angular condition, may be applied to any of the coil units described in the present disclosure.

The present disclosure is not limited to the above embodiments, and can be implemented by various configurations within the scope of the present disclosure. For example, technical features included in the embodiments, which correspond to technical features included in the exemplary aspects described in the SUMMARY of the present disclosure, can be freely combined with each other or can be freely replaced with another feature in order to solve a part or all of the above issue and/or achieve a part or all of the above advantageous benefits. For example, the appearance configuration of the protrusion 861c according to the fifth embodiment may be applied to each post member 91 according to the fifth embodiment as an example of the combination of the fifth and eighth embodiments. Specifically, each post member 91 may be tapered upward in the stacking direction such that the area of the cross section of the corresponding post member 91 orthogonal to the stacking direction becomes smaller in the upward of the stacking direction.

One or more of the technical features included in the above exemplary embodiments, which are not described as essential elements in the specification, can be omitted as necessity arises.

### [First technological concept]

A coil unit according to the first technological concept has a central axis and is usable for a wireless power transfer system (300).

The coil unit includes a ferrite plate (13) having an outer edge, a coil board (14) to which a coil (112) for transmission or reception of AC power is mounted, and a housing (11) that houses the ferrite and the coil board therein while being stacked in a predetermined direction that is defined as a stacking direction. The coil unit includes a plurality of post structures (21, 22, 23, 24) for ensuring a space in the housing in the stacking direction. Each of the post structures includes at least one through hole (41, 42) formed through the magnetic-material plate and the coil board, and at least one support post (31, 32) received in the at least one through hole. Each of the post structures is arranged along a corresponding respective flow direction of magnetic flux to be induced by the coil at the transmission or reception of the AC power from the outer edge of the ferrite plate toward the central axis through the ferrite plate. The post structures are separated from one another around the central axis as viewed in the stacking direction.

### [Second technological concept]

In the coil unit according to the second technological concept, which depends from the first technological concept, at least one of the post structures includes at least first and second through holes as the at least one through hole, the at least first and second through holes being formed through the magnetic-material plate and the coil board. The at least one of the post structures includes at least first and second support posts as the at least one support post. The at least first and second support posts are respectively received in the at least first and second through holes. The first through hole is arranged to be closer to the outer edge of the magnetic-material plate than the second through hole is, so that the second through hole is arranged to be closer to the central axis than the first through hole is. Each of the first and second through holes has an opening area as viewed in the stacking direction. The opening area of the second through hole is smaller than the opening area of the first through hole.

### [Third technological concept]

In the coil unit according to the third technological concept, which depends from the first or second technological concept, at least one of the post structures includes a plurality of through holes as the at least one through hole. The plurality of through holes are formed through the magnetic-material plate and the coil board. The at least one of the post structures includes a plurality of first and second support posts as the at least one support post. The support posts are respectively received in the through hole.

The through holes are arranged from the outer edge of the magnetic-material plate toward the central axis at predetermined intervals. The predetermined intervals include at least a first interval and a second interval. The first interval is arranged to be closer to the outer edge of the magnetic-material plate than the second interval is, so that the second interval is arranged to be closer to the central axis than the first interval is. The second interval is wider than the first interval.

### [Fourth technological concept]

In the coil unit according to the fourth technological concept, which depends from any one of the first to third technological concepts, the post structures are arranged point-symmetrically with respect to the central axis as viewed in the stacking direction.

### [Fifth technological concept]

In the coil unit according to the fifth technological concept, which depends from any one of the first to fourth technological concepts, the at least one support post has a cross section along a plane orthogonal to the stacking direction. The cross section of the at least one support post has a predetermined shape and a predetermined size. The at least one through hole has a cross section along the plane orthogonal to the stacking direction. The cross section of the at least one through hole has a predetermined shape and a predetermined size. The predetermined shape and predetermined size of the cross section of the at least one support post is substantially the same as those of the cross section of the corresponding at least one through hole.

### [Sixth technological concept]

In the coil unit according to the sixth technological concept, which depends from any one of the first to fifth technological concepts, the at least one support post received in the at least one through hole is configured to extend therethrough to an inner periphery of the housing so as to be integrated with the housing.

### [Seventh technological concept]

A coil unit according to the seventh technological concept has a central axis and is usable for a wireless power transfer system. The coil unit includes a magnetic-material plate having an outer edge, a coil for transmission or reception of AC power, and a housing that houses the magnetic-material plate and the coil therein while being stacked in a predetermined direction that is defined as a stacking direction. The housing includes a first casing and a second casing separatable in the stacking direction. The coil unit includes a plurality of post structures, each of which includes at least one support post arranged to extend from the first casing to the second casing while penetrating through the magnetic-material plate and the coil to combine the first casing and the second casing with one another. Each of the post structures is arranged along a corresponding respective flow direction of magnetic flux to be induced by the coil at the transmission or reception of the AC power from one of the outer edge of the magnetic-material plate and the central axis toward the other thereof through the magnetic-material plate. The post structures are separated from one another around the central axis as viewed in the stacking direction.

### [Eighth technological concept]

In the coil unit according to the eighth technological concept, which depends from the seventh technological concept, the at least one support post of at least one of the post structures comprises a post member having opposite first and second ends in the stacking direction, the first end of the post member is attached to the first casing, and the second end of the post member is attached to the second casing.

### [Ninth technological concept]

The coil unit according to the ninth technological concept, which depends from the seventh or eighth technological concept, further includes a shield plate arranged on an opposite side of the coil with respect to the magnetic-material plate to provide shielding of a part of the magnetic flux, and at least one spacer member formed of metal. The coil, the magnetic-material plate, and the shield plate are stacked in the stacking direction. The first casing is formed of a material having at least no magnetic property among magnetic and electrical properties. The first casing includes at least one protrusion that extends to penetrate through the coil and the magnetic-material plate in the stacking direction while being in contact with the coil. The second casing is arranged to be in contact with the shield plate. The at least one spacer is arranged to penetrate through the shield plate in the stacking direction while being in contact with the at least one protrusion. The at least one protrusion of the first casing and the at least one spacer member constitute the at least one support post of at least one of the post structures.

### [Tenth technological concept]

In the coil unit according to the tenth technological concept, which depends from the ninth technological concept, the first casing including the at least one protrusion is formed of a material containing conductive fibers, and at least portion of the conductive fibers constituting the at least one protrusion is arranged along a corresponding flow direction of the magnetic flux.

### [Eleventh technological concept]

In the coil unit according to the eleventh technological concept, which depends from the ninth or tenth technological concept, the at least one protrusion has a cross section along a direction orthogonal to the stacking direction and has a tapered appearance that an area of the cross section of the at least one protrusion becomes smaller from the coil toward the magnetic-material plate.

### [Twelfth technological concept]

In the coil unit according to the twelfth technological concept, which depends from the eighth technological concept, the post member has a cross section along a direction orthogonal to the stacking direction and has a tapered appearance that an area of the cross section of the post member becomes smaller from the coil toward the magnetic-material plate.

### [Thirteenth technological concept]

In the coil unit according to the thirteenth technological concept, which depends from any one of the seventh to twelfth technological concepts, each of the post structures comprises a plurality of support posts as the at least one support post. At least one first support post is included in the support posts. The at least one first support post is located at a first position where a magnitude of a first portion of the magnetic flux induced by the coil is higher than a predetermined threshold. The at least one first support post is formed of a first material having no conductivity. At least one second support post is included in the support posts. The at least one second support post is located at a second position where a magnitude of a second portion of the magnetic flux induced by the coil is lower than or equal to the predetermined threshold. The at least one second support post is formed of metal.

## Claims

1. A coil unit having a central axis and usable for a wireless power transfer system (300), the coil unit comprising:
a magnetic-material plate (13) having an outer edge;
a coil board (14) to which a coil (112) for transmission or reception of AC power is mounted;
a housing (11) that houses the magnetic-material plate and the coil board therein while being stacked in a predetermined direction that is defined as a stacking direction; and
a plurality of post structures (21, 22, 23, 24) for ensuring a space in the housing in the stacking direction,
each of the post structures comprising:
at least one through hole (41, 42) formed through the magnetic-material plate and the coil board; and
at least one support post (31, 32) received in the at least one through hole,
each of the post structures being arranged along a corresponding respective flow direction of magnetic flux to be induced by the coil at the transmission or reception of the AC power from the outer edge of the magnetic-material plate toward the central axis through the magnetic-material plate,
the post structures being separated from one another around the central axis as viewed in the stacking direction.

2. The coil unit according to claim 1, wherein:
at least one of the post structures comprises:
at least first and second through holes as the at least one through hole, the at least first and second through holes being formed through the magnetic-material plate and the coil board; and
at least first and second support posts as the at least one support post, the at least first and second support posts being respectively received in the at least first and second through holes;
the first through hole is arranged to be closer to the outer edge of the magnetic-material plate than the second through hole is, so that the second through hole is arranged to be closer to the central axis than the first through hole is;
each of the first and second through holes has an opening area as viewed in the stacking direction; and
the opening area of the second through hole is smaller than the opening area of the first through hole.

3. The coil unit according to claim 1, wherein:
at least one of the post structures comprises:
a plurality of through holes as the at least one through hole, the plurality of through holes being formed through the magnetic-material plate and the coil board; and
a plurality of first and second support posts as the at least one support post, the support posts being respectively received in the through holes;
the through holes are arranged from the outer edge of the magnetic-material plate toward the central axis at predetermined intervals;
the predetermined intervals include at least a first interval and a second interval, the first interval being arranged to be closer to the outer edge of the magnetic-material plate than the second interval is, so that the second interval is arranged to be closer to the central axis than the first interval is; and
the second interval is wider than the first interval.

4. The coil unit according to claim 1, wherein:
the post structures are arranged point-symmetrically with respect to the central axis as viewed in the stacking direction.

5. The coil unit according to claim 1, wherein:
the at least one support post has a cross section along a plane orthogonal to the stacking direction, the cross section of the at least one support post having a predetermined shape and a predetermined size;
the at least one through hole has a cross section along the plane orthogonal to the stacking direction, the cross section of the at least one through hole having a predetermined shape and a predetermined size; and
the predetermined shape and predetermined size of the cross section of the at least one support post is substantially the same as those of the cross section of the corresponding at least one through hole.

6. The coil unit according to any one of claims 1 to 5, wherein:
the at least one support post received in the at least one through hole is configured to extend therethrough to an inner periphery of the housing so as to be integrated with the housing.

7. A coil unit having a central axis and usable for a wireless power transfer system, the coil unit comprising:
a magnetic-material plate having an outer edge;
a coil for transmission or reception of AC power;
a housing that houses the magnetic-material plate and the coil therein while being stacked in a predetermined direction that is defined as a stacking direction, the housing comprising a first casing and a second casing separatable in the stacking direction; and
a plurality of post structures, each of which comprises:
at least one support post arranged to extend from the first casing to the second casing while penetrating through the magnetic-material plate and the coil to combine the first casing and the second casing with one another,
each of the post structures being arranged along a corresponding respective flow direction of magnetic flux to be induced by the coil at the transmission or reception of the AC power from one of the outer edge of the magnetic-material plate and the central axis toward the other thereof through the magnetic-material plate,
the post structures being separated from one another around the central axis as viewed in the stacking direction.

8. The coil unit according to claim 7, wherein:
the at least one support post of at least one of the post structures comprises a post member having opposite first and second ends in the stacking direction;
the first end of the post member is attached to the first casing; and
the second end of the post member is attached to the second casing.

9. The coil unit according to claim 7, further comprising:
a shield plate arranged on an opposite side of the coil with respect to the magnetic-material plate to provide shielding of a part of the magnetic flux; and
at least one spacer member formed of metal,
wherein:
the coil, the magnetic-material plate, and the shield plate are stacked in the stacking direction;
the first casing is formed of a material having at least no magnetic property among magnetic and electrical properties;
the first casing includes at least one protrusion that extends to penetrate through the coil and the magnetic-material plate in the stacking direction while being in contact with the coil;
the second casing is arranged to be in contact with the shield plate;
the at least one spacer is arranged to penetrate through the shield plate in the stacking direction while being in contact with the at least one protrusion; and
the at least one protrusion of the first casing and the at least one spacer member constitute the at least one support post of at least one of the post structures.

10. The coil unit according to claim 9, wherein:
the first casing including the at least one protrusion is formed of a material containing conductive fibers; and
at least portion of the conductive fibers constituting the at least one protrusion is arranged along a corresponding flow direction of the magnetic flux.

11. The coil unit according to claim 9, wherein:
the at least one protrusion has a cross section along a direction orthogonal to the stacking direction and has a tapered appearance that an area of the cross section of the at least one protrusion becomes smaller from the coil toward the magnetic-material plate.

12. The coil unit according to claim 8, wherein:
the post member has a cross section along a direction orthogonal to the stacking direction and has a tapered appearance that an area of the cross section of the post member becomes smaller from the coil toward the magnetic-material plate.

13. The coil unit according to claim 7, wherein:
each of the post structures comprises a plurality of support posts as the at least one support post;
at least one first support post is included in the support posts, the at least one first support post being located at a first position where a magnitude of a first portion of the magnetic flux induced by the coil is higher than a predetermined threshold, the at least one first support post being formed of a first material having no conductivity; and
at least one second support post is included in the support posts, the at least one second support post being located at a second position where a magnitude of a second portion of the magnetic flux induced by the coil is lower than or equal to the predetermined threshold, the at least one second support post being formed of metal.
